# EUROPEAN PATENT APPLICATION

(11) **EP 1 249 630 A2**
(43) Date of publication of application: **16.10.2002**
(21) Application number: 02007615.4
(22) Date of filing: 03.04.2002
(51) Int. Cl.: F16D 65/00

(54) **Corrostion inhibition of motor vehicle components**

(30) Priority: 10.04.2001 GB 0108960; 06.03.2002 GB 0205226
(71) Applicant: CARRS PAPER LIMITED, Solihull West Midlands B90 4LJ (GB)
(72) Inventor: Higgins, Peter John, Leamington Spa, Warwickshire CV32 7BH (GB)
(74) Representative: Lally, William

(57) **Abstract**

Means for inhibiting corrosion of a brake disc (15) of a disc brake assembly (10) associated with a road wheel (12) of a motor vehicle, comprising a member (11) adapted to be fitted in the road wheel and partially to define a volume containing the brake disc, said member including means for emitting a corrosion inhibiting vapour in said volume.

## Description

This invention relates to the protection of motor vehicle components from corrosion. More particularly the components to whose protection the invention relates are the brake discs in disc brake assemblies.

A disc brake assembly comprises a rotor which is of disc-like form and hence is called the disc, and a calliper assembly incorporating an operating mechanism whereby brake pads are pressed into engagement with opposite faces of the disc when the brake is to be applied. Only a relatively small sector of the disc is covered by the calliper assembly and the remainder of the disc is exposed to the elements. Whilst there may be some form of disc shield on the inboard side of the disc, the outboard face is usually visible through openings in a road wheel: indeed for high performance vehicles' it becomes a feature of the vehicle's styling to have a large brake disc visible through a wheel, suggestive of high braking ability necessitated by a powerful vehicle, although it is also functional in terms of providing access of cooling air to the disc.

Brake discs usually are of a cast iron material, as this has good braking properties, but is susceptible to corrosion (rust). Such corrosion does not normally arise when a vehicle is in regular use, because the disc surfaces are continually cleaned by the brake pads; but can give problems if a vehicle is not used for a substantial period of time. This is particularly a problem during the period immediately after manufacture of a vehicle, when it may be stored, frequently out of doors, prior to delivery, or possibly transported for long distances. Many vehicles are transported by sea from their country of manufacture to another country where they are to be used, which may involve vehicles standing on the dockside for long periods of time where salt-laden sea air is especially corrosive. Corrosion of a brake disc may cause brake juddering when the brake is used, or other braking problems. There is also the aesthetic aspect: the owner or potential owner of an expensive vehicle does not wish to see a vehicle in a showroom with anything other than smooth and shiny brake discs.

There have been various proposals for corrosion protection of brake discs during initial transportation and storage of motor vehicles. One approach has been to place a plastics bag over the complete brake assembly of disc and calliper, the bag containing a small quantity of a substance giving off a corrosion inhibiting vapour. However this is inconvenient to fit on the assembly line, and limits the amount by which the vehicle can be driven without removal of the bag.. A further proposal, in GB-1506876-A, involves the use of a disc shield and a sheet of substance giving off a corrosion inhibiting vapour, but again this is inconvenient to fit on the assembly line, having to be fitted as a separate operation before the wheel is fitted.

It is the object of the present invention to provide an improved device and method for inhibiting brake disc corrosion under the conditions described above.

According to one aspect of the invention, we provide a means for inhibiting corrosion of a brake disc of a disc brake assembly associated with a road wheel of a motor vehicle, comprising a member adapted to be fitted to the interior of the road wheel and partially to define a volume containing the brake disc, said member including means for emitting a corrosion inhibiting vapour in said volume.

Said member may include a portion which lies against the internal periphery of the rim of the wheel, in a region generally radially outwardly of the brake disc, and preferably a wall portion which extends generally radially inwardly from an internal peripheral portion of the rim of the wheel for at least partially blocking openings extending through the wheel lengthwise of its axis of rotation, i.e. between "spoke" portions of the wheel.

Thus the general form of the member may be that of a "cup washer", i.e. a shallow cup or bowl but with a central aperture through which the part of the disc brake assembly to which the wheel is secured extends.

Whilst it would be within the scope of the invention for the member to be of a plastics or other material provided with a coating which emits a corrosion-inhibiting vapour, preferably it is of or includes a paper material impregnated with a substance emitting a corrosion inhibiting vapour.

Conveniently the member may be of a sheet material comprising paper as aforesaid laminated to a metal, e.g. aluminium foil. Such a laminated material is relatively easy to form to the required shallow cup or bowl shape and retains its shape satisfactorily in use.

The member may be a push-fit inside the wheel and/or an adhesive might be used to retain it in position in the wheel. For example, the external periphery of the member might be provided with a number of beads of a tacky adhesive, and/or the radially extending wall portion of the member may be provided with adhesive.

The peripheral wall of the member could be fluted or otherwise configured to enable it to conform to the internal shape of different wheels, e.g. ones having different internal tapers.

As compared with previously proposed corrosion inhibition systems for brake discs, the invention has the advantage that nothing has to be fitted to the brake disc assembly on the production line. The members are simply fitted to wheels, which could even be done by a supplier of wheels, and then the wheels are simply fitted to vehicles as normal. The vehicle may be driven with the member in situ, and when the protection afforded by the member is no longer required, in the majority of cases the member can be removed without wheel removal, e.g. by working through one of the openings between spoke portions of the wheel. Even if the member cannot be removed in this way, all that is necessary is wheel removal and withdrawal of the member from the removed wheel.

Although a member in accordance with the invention does not define a completely closed volume containing the brake disc, it has been found that it adequately protects against disc corrosion. It closes off the openings between spokes of the wheel preventing or substantially preventing atmospheric access to the brake disc from the outboard side, whilst the opening which could give access to the brake disc from the inboard side is concealed within the wheel rim and not vulnerable to water splashes for example. The corrosion inhibiting vapour evolved protects the brake disc satisfactorily.

According to another aspect of the invention, we provide a method of inhibiting corrosion of a brake disc of a disc brake assembly associated with a road wheel of a motor vehicle, comprising fitting a member within the road wheel and fitting the road wheel to the vehicle, said member when thus fitted partially defining a volume containing the brake disc, and providing means for emitting a corrosion inhibiting vapour within the volume.

The invention will now be described by way of example with reference to the accompanying drawings:-
Figure 1 is a partial section showing a disc brake assembly, a road wheel, and a corrosion protection member, prior to assembly;
Figure 2 is a perspective view of the corrosion protection member of Figure 1;
Figure 3 is an assembled partial section showing the corrosion protection member in situ;
Figure 4 is a perspective view of a further embodiment of corrosion protection member in accordance with the invention;
Figure 5 is a section as Figure 3, showing the corrosion protection member of Figure 4 in situ.

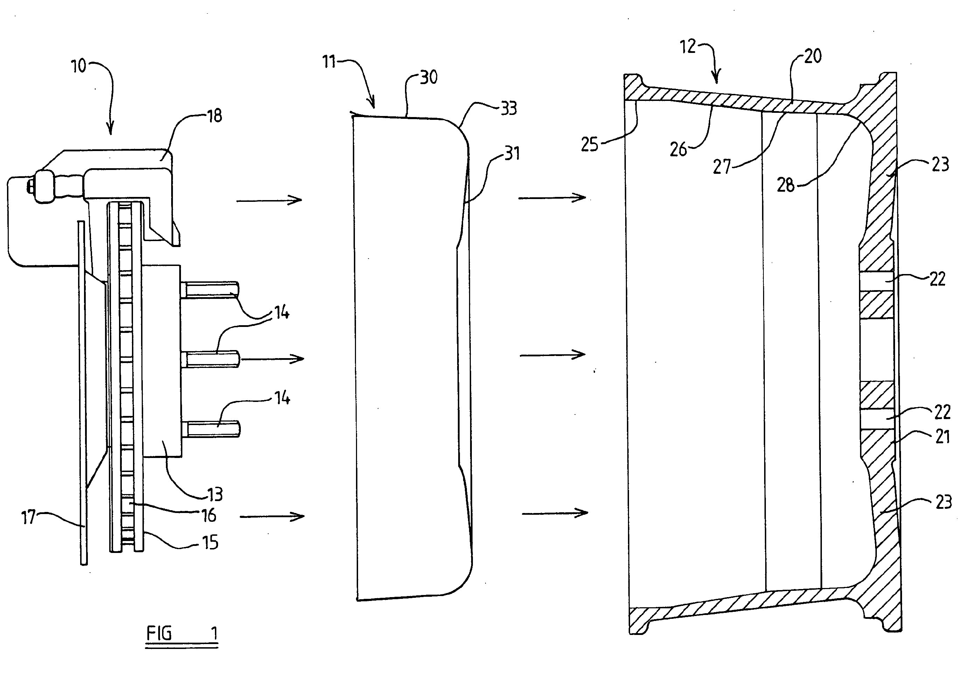

Referring firstly to Figure 1 of the drawings, this shows, in a partly sectioned view prior to assembly thereof, a disc brake assembly indicated generally at 10, a corrosion protection member indicated generally at 11, and a road wheel 12. The disc brake assembly includes a hub 13 which is rotatably mounted by a suitable internal bearing arrangement, and which carries studs 14 for wheel attachment. The hub further carries a brake disc 15 which as illustrated is of the ventilated type having internal passages for flow of cooling air terminating in peripheral apertures 16. Inboard of the hub and disc there is a fixed back plate 17. A calliper assembly is indicated generally at 18, and this includes, in known manner, suitable hydraulic actuating means for causing brake pads, not shown, to be urged into engagement with oppositely facing radially-extending surfaces of the disc 15 when the brake is to be applied.

The wheel 12 includes a rim portion 20 for carrying a pneumatic tyre, and a nave portion 21 for mounting of the wheel on the hub 13. When mounted the studs 14 extend through circumferentially spaced apertures 22 in the nave portion 21 and are engaged by nuts (not shown) outboard of the nave portion 21 to hold the wheel in place. Radially extending circumferentially spaced spoke portions 23 extend from the nave portion 21 to the rim portion 20, and between the spaced spoke portions 23 there are openings which extend parallel to the axis of rotation of the wheel to the interior thereof. The illustrated wheel is of cast aluminium alloy and in many such wheels the spaces between the spoke portions 23 are such that a large amount of the disc brake assembly is visible from the outboard side of the wheel.

The internal profile of the rim portion 20 of the wheel includes an axis-parallel portion 25, a first frusto-conically tapering portion 26 and a second such tapering portion 27 of lesser angle, leading to a further tapering then rounded portion 28 which leads into the spoke portions 23.

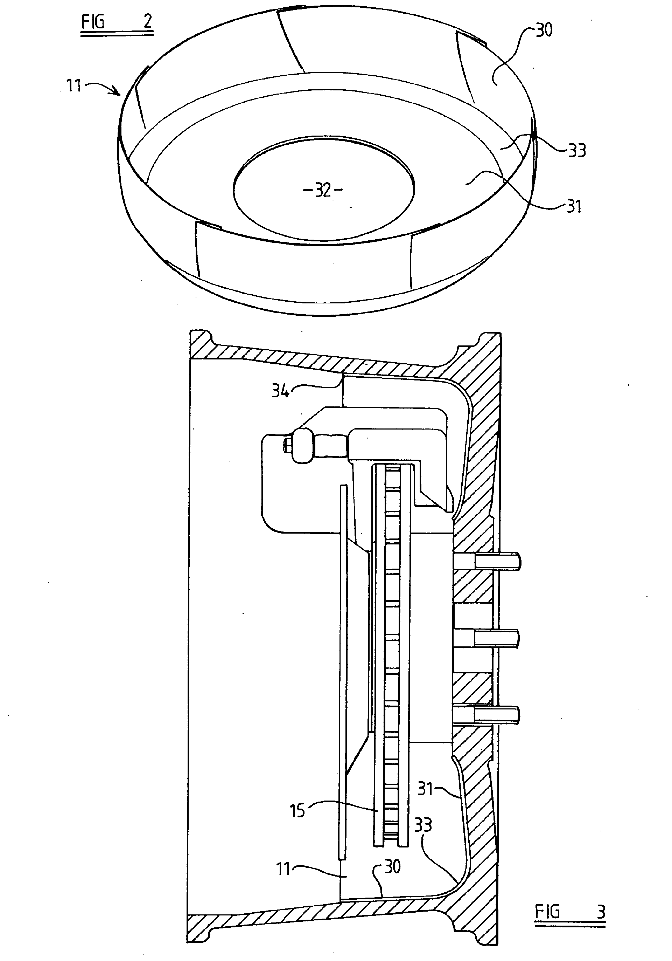

The corrosion protection member 11, which is shown in perspective view in Figure 2, is generally in the form of a "cup washer", i.e. a shallow cup or bowl with a peripheral wall 30 and a base 31 with a central aperture 32. Between the peripheral wall 30 and base 31 there is a transition portion 33 which is curved. The shape of the peripheral wall 30, base 31, and transition portion 33 respectively match the internal surface portion 27 of the wheel, the inboard face of the spoke portions 23 of the wheel, and the curved portion 28 therebetween so that the corrosion protection member fits closely within the wheel as clearly seen in Figure 3. When thus fitted, the base portion 31 of the corrosion protection member substantially closes off the openings between the spoke portions 23 of the wheel, so that the brake disc assembly is not accessible from the outboard side of the wheel.

Preferably the corrosion protection member 11 is of a laminated sheet material comprising a paper substance adhesively secured to a metal, e.g. aluminium, foil, with the paper on the inside surface. The paper is impregnated with a substance giving off a corrosion-inhibiting vapour. Such a laminated material is advantageous, because it is readily formed in a moulding process to a required shape to fit closely within a wheel, and retains its shape when thus formed. The metal foil, which is visible through the openings in the wheel when the member is fitted, is moisture resistant, while the paper impregnated with the vapour corrosion inhibitor substance may have a degree of absorbency to take up any water which might penetrate to the interior of the wheel.

By way of example, the paper substrate may be kraft paper of weight from 22-200 g/m², e.g. 125 g/m². The metal foil may be an aluminium foil of 50 micron thickness, and they may be secured together by a latex or any other suitable adhesive or by an appropriate wax. The paper may be impregnated with a vapour corrosion inhibitor substance at a level of from 5-20 g/m², e.g. 12.5 g/m².

The shape of the corrosion-protection member may be such that it will be retained in the wheel by virtue of being a close fit therein and/or by interfitting with the internal shape of the wheel. An adhesive may be used for securing it in position in the wheel, e.g. a number of circumferentially distributed beads of a tacky adhesive which may be of the hot melt type.

When fitted as shown in Figure 3, in addition to the aforesaid closing of the openings in between the spokes of the wheel by the portion 31 of the protection member, it will be noted that the peripheral wall portion 30 of the protection member lies radially outwardly of the brake disc 15. Although the protection member does not define a completely closed volume containing the brake disc, access of ambient atmosphere to the latter being possible radially inwardly of the inboard edge (34) of the member, it has been found that satisfactory corrosion protection of the brake disc is achieved. This has been tested by subjecting a brake disc assembly to testing conditions, involving a high level of relatively humidity of salt-laden air at an elevated temperature, simulating some 12-18 months of exposure to normal atmospheric conditions.

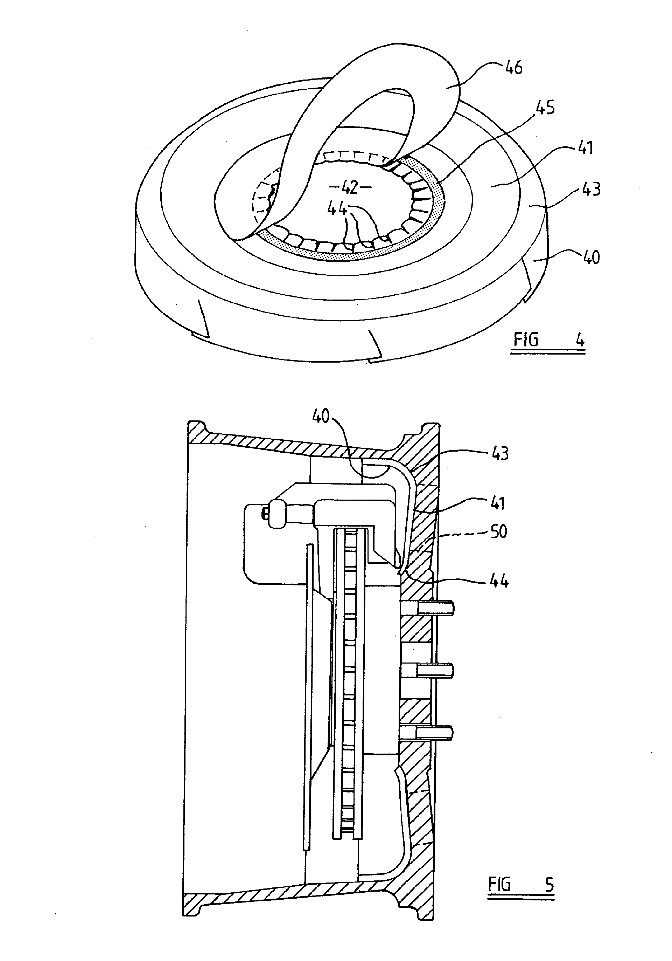

Referring now to Figure 4 of the drawings, this illustrates an alternative embodiment of corrosion protection member in accordance with the invention. It is of the same general form as that shown in Figure 2, comprising a peripheral wall 40, a radially extending base wall 41, with central aperture 42, and a transition portion 43 therebetween. It differs from the embodiment shown in Figure 2 in that the peripheral wall 40 is shallower, i.e. of lesser axial extent, than the peripheral wall 30, and in that the radially innermost region of the base wall 41 around the aperture 42 is provided with a number of discontinuities such as radially extending slits or cuts as indicated at 44. Radially outwardly of the outermost ends of the slits or cuts 44, the outwardly facing surface of wall 41 is provided with a relatively narrow ring 45 of pressure sensitive adhesive, for securing the corrosion protection member to a wheel with which it is to be used. A release member comprising an annulus 46 of release paper, e.g. silicone release paper, covers the ring of pressure sensitive adhesive 45 and the adjacent areas, to prevent the corrosion protection members from adhering to one another when nested in a pile during transportation prior to use.

Figure 5 shows the corrosion protection member of Figure 4 in situ in a wheel. It will be noted that the wall portion 41 of the member blocks openings extending where indicated at 50 between spoke portions of the wheel, whilst the ring 45 of adhesive adheres to the wheel inwardly of the openings 50 and adjacent its nave portion. The slits or cuts 44 assist the member in conforming to the surface shape of the wheel in its nave portion. The peripheral wall 40 does not extend as far axially as the peripheral wall 30 of the member shown in Figure 3, and indeed does not even lie directly radially outwardly of the brake disc illustrated, but nevertheless it has been found that this configuration of corrosion protection member adequately protects the brake disc against corrosion under the applicable conditions.

Although a preferred material for the corrosion protection member is a kraft paper/metal foil laminate as above described, it would be appreciated that other materials may be suitable. Possibly the member could simply be a metal foil or plastics sheet material formed to the appropriate shape, having on its interior surface a coating emitting a corrosion inhibiting vapour. However, this would not have the ability to absorb any water which may penetrate to the interior of the member, which is an advantage in the case of the paper-based material. Possibly a paper-based material alone, i.e. not laminated with a metal foil, could be suitable. The paper in the laminate material may be creped, to give it a greater ability to absorb vapour corrosion inhibiting substance and provide greater flexibility when forming the member.

To enable it to fit wheels of different internal shapes, possibly the peripheral wall of the corrosion protection member could be fluted so that it can assume any required degree of frusto-conical taper. In general however the corrosion protection member will be shaped to suit a particular vehicle wheel. Vehicles usually have all four wheels the same as one another, so a particular vehicle will not require more than one configuration of corrosion protection member to be used.

Vapour corrosion inhibitor substances are well known, and one or more such substances suitable for use in the invention may readily be selected by a person skilled in this art. By way of example only, such substances may include one or more of organic amides, inorganic nitrites, amine salts such as diethanolamine nitrite, dicyclohexylamine benzoate and so on.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A member (11) for inhibiting corrosion of a brake disc of a disc brake assembly disposed within a motor vehicle road wheel; **characterised in that** said member is adapted to be fitted to the interior of the road wheel thereby partially to define a volume containing said brake disc, and said member comprises a substance for emitting a corrosion inhibiting vapour in the vicinity of the brake disc.

2. A member (11) according to Claim 1 further **characterised in that** it comprises a peripheral portion (30; 40) arranged to lie against an internal periphery of the wheel rim (20) in a region generally radially outwardly of the brake disc, and a wall portion (31; 41) extending generally radially inwardly from said internal periphery of the rim to lie against a nave portion (21) of the wheel.

3. A member according to Claim 2 further **characterised by** an adhesive for retaining the member in position in the wheel.

4. A member according to Claim 3 further **characterised in that** said adhesive (45) is provided on said generally radially extending wall portion (41) of the member.

5. A member according to Claim 3 further **characterised in that** said adhesive is provided on said peripheral portion (30) of the member.

6. A member according to any one of the preceding claims further **characterised in that** said member is a push fit inside the wheel.

7. A member according to any one of the preceding claims further **characterised in that** said member comprises a coating emitting said corrosion inhibiting vapour.

8. A member according to any one of Claims 1 to 6 further **characterised in that** it is of a sheet material comprising a paper impregnated with said substance emitting a corrosion inhibiting vapour, laminated to a metal foil.

9. A member according to Claim 8 further **characterised in that** said laminated material is formed to a shallow cup shape, having a central aperture.

10. A member according to Claim 2 or any claim appendant thereto, further **characterised in that** said radially extending wall portion (41) thereof has a central aperture (42) and a region around said aperture provided with discontinuities (44).

11. A motor vehicle road wheel **characterised by** having fitted therein a member according to any one of the preceding claims for inhibiting corrosion of a brake disc disposed within the wheel.

12. A wheel according to Claim 11 as appendant directly or indirectly to Claim 2, further **characterised in that** said wheel nave portion includes openings and said member at least partially blocks said openings.
